# EUROPEAN PATENT SPECIFICATION

(11) **EP 1 516 798 B1**
(45) Date of publication and mention of the grant of the patent: **01.10.2008**
(21) Application number: 03760906.2
(22) Date of filing: 19.06.2003
(51) Int. Cl.: B62D 1/19, B60R 21/05, B62D 5/04, B62D 1/181

(54) **SHOCK ABSORBING STEERING COLUMN UNIT FOR VEHICLE**
STOSSDÄMPFENDE LENKSÄULENEINHEIT FÜR FAHRZEUG
UNITE DE COLONNE DE DIRECTION AMORTISSANT LES CHOCS POUR VEHICULE

(30) Priority: 19.06.2002 JP 2002179131
(43) Date of publication of application: 23.03.2005
(73) Proprietor: NSK LTD., Shinagawa-ku, Tokyo 141-8560 (JP)
(72) Inventor: SADAKATA, Kiyoshi; c/o NSK LTD., Maebashi-shi, Gunma 371-0853 (JP); HIGASHINO, Kiyoharu; c/o NSK LTD., Maebashi-shi, Gunma 371-0853 (JP); AIDA, Akira; c/o NSK LTD., Maebashi-shi, Gunma 371-0853 (JP); KAWAIKE, Yuji; c/o NSK LTD., Maebashi-shi, Gunma 371-0853 (JP)
(74) Representative: Cross, James Peter Archibald
(86) International application number: PCT/JP2003/007791
(87) International publication number: WO 2004/000627

(56) References cited:
- GB-A- 2 343 157
- JP-A- 7 257 398
- JP-A- 10 045 006
- JP-A- 57 051 574
- JP-A- 2000 127 991
- JP-A- 2001 208 089
- JP-A- 2001 221 245
- JP-B2- 2 983 130
- JP-U- 1 172 965
- US-A- 5 590 565

## Description

### Technical Field

The present invention relates to an impact absorbing type steering column apparatus for an automotive vehicle.

### Background Arts

In a steering column apparatus for an automotive vehicle, according to a telescopic type capable of adjusting a steering column in axial directions, corresponding to a driving position (posture) of a driver, for example, an upper column is fitted in a telescopically slidable manner to a lower column fixed to a car body.

For example, a steering column of this type is disclosed in US 5 590 565, which document discloses the preamble of claims 1 and 2.

Further, according to a non-telescopic type incapable of making the telescopic adjustment, for instance, the upper column is so fitted to the lower column fixed to the car body as not to slide at a normal time.

Moreover, an electric power steering type in a column assist system is that an electric power assist apparatus is provided at a column portion between a steering wheel and an upper joint of an intermediate shaft, thus performing the steering assist.

By the way, when a secondary collision happens, the upper column is moved for collapsing along the lower column fixed to the car body towards the front side of the automotive vehicle, and in the meantime a variety of impact absorbing means absorb impact energy.

A fitting length between the two columns upon collapsing has, however, become comparatively short over the recent years.

As a result, upon the secondary collision, just when the upper column gets collapsed and is to start moving towards the front side of the automotive vehicle, the upper column might not necessarily smoothly slide on the lower column.

Especially in the electric power steering type in the column assist system, it is difficult to ensure a space for collapsing due to a spatial influence of a motor, a deceleration mechanism, etc., and hence the above tendency is conspicuous. Further, in the case of the electric power steering type in the column assist system and in the telescopic adjustment system, the tendency described above become more conspicuous.

Further, a fitting angle of a steering wheel (which is an angle of a steering shaft to the horizon) is set as large as 30 degrees or thereabouts, depending on the automotive vehicles. In this case, an acting direction of an impact load towards the front side of the automotive vehicle is not coincident with a slide direction of the upper column at the fitting portions of the two columns, and consequently blocking (unsmoothed) force acts on between the fitting portions of the two columns. In this case also, the upper column might not necessarily smoothly slide on the lower column.

Such being the case, if the fitting length between the two columns is comparatively short, or even if the fitting angle of the steering wheel is large, there is demand for a smooth start of the movement of the upper column towards the front side of the automotive vehicle.

Moreover, when performing a telescopic operation, the operation involves effecting a movement in the axial direction with one hand in a blocked state, wherein operating force rises and a locked state occurs as the case may be.

Note that for attaining a smooth start of the movement of the upper column when collapsing, for example, a spacer formed of a resin is interposed between the two columns according to Japanese Utility Model Application Laid-Open No. 1-172965, a spacer formed of super high polymeric polyethylene is press-fitted in between the two columns according to Japanese Patent Application Laid-Open No. 9-95245, and a spacer partially formed with a recessed portion and including a metal mesh coated with Teflon (registered trademark), is press-fitted in between the two columns according to Japanese Patent No. 2983130.

### Disclosure of the Invention

It is an object of the present invention, which was devised under such circumstances, to provide an impact absorbing type steering column apparatus for an automotive vehicle that is capable of a smooth start of a movement of an upper column towards a front side of the automotive vehicle even if a fitting length between a lower column and the upper column when collapsing upon a secondary collision is comparatively short, and so on.

Aspects and embodiments of the present invention are set out in the accompanying claims.

Thus, according to embodiments of the present invention, the low-friction material treatment is effected on one or both of the slide surfaces of the fitting portions of the two columns, and hence a slide load of the upper column can be reduced by decreasing a coefficient of friction on the slide surfaces of the fitting portions of the two columns. Accordingly, if a fitting length between the two columns is comparatively short, or even if a fitting angle of a steering wheel is large, a smooth start of the movement of the upper column towards the front side of the automotive vehicle can be attained.

As a result, subsequent collapsing can be smoothly performed, thereby facilitating control of the absorption of the impact energy. Further, as a consequence of the smooth start of the movement of the upper column, none of a blocking load affects the two columns, thereby enabling the collapsing to be smoothly done.

Moreover, in the case of a telescopic adjustment system, handling is done with one hand in a blocked (unsmoothed) state when performing the operation for the telescopic adjustment, resulting possibly in a rise in operating force. According to embodiments of the present invention, however, the low-friction material treatment is effected on one or both of the slide surfaces of the fitting portions of the two columns, and therefore the operating force for the telescopic adjustment can be reduced by decreasing the coefficient of friction on the slide surfaces of the fitting portions of the two columns, whereby the operation for the telescopic adjustment can be smoothly conducted.

Note that a collapsing stroke implies a collapsing length, and the collapsing implies the absorption of the impact energy through plastic deformation and the like.

### Brief Description of the Drawings

FIG. 1 is a side view of an impact absorbing type steering column apparatus in a tilt/telescopic adjustment system in a first embodiment of the present invention;
FIGS. 2A and 2B are enlarged sectional views taken along the line A-A and the line B-B in FIG. 1 (or FIG. 8), respectively;
FIG. 3 is a side view of the steering column apparatus shown in FIG. 1, illustrating a shortest telescopic adjustment state;
FIG. 4 is a view showing a state of an end of absorption of an impact caused when a secondary collision happens;
FIG. 5 is a side view of an impact absorbing type steering column apparatus in a tilt/telescopic adjustment system in a second embodiment of the present invention;
FIG. 6 is a sectional view taken along the line B-B in FIG. 5 or FIG. 11;
FIGS. 7A - 7C show a third embodiment of the present invention; FIG. 7A is a semi-sectional view of a sleeve; FIG. 7B is a partial sectional view showing a modified example of an inner column; FIG. 7C is a partial sectional view of a further modified example of the inner column;
FIG. 8 is a side view of an impact absorption type steering column apparatus in the tilt/telescopic system according to a fourth embodiment of the present invention;
FIG. 9 is a side view of the steering column apparatus shown in FIG. 8, showing a shortest telescopic adjustment state;
FIG. 10 is a side view of the steering column apparatus shown in FIG. 8, showing a state in which the absorption of the impact generated upon the secondary collision is terminated;
FIG. 11 is a side view of an impact absorption type steering column apparatus in the tilt/telescopic system according to a fifth embodiment of the present invention;
FIG. 12A is a side view of an impact absorption type steering column apparatus in the tilt/telescopic system according to a sixth embodiment of the present invention; FIG. 12B is a sectional view taken along the line b-b in FIG. 12A;
FIG. 13A is a side view of an impact absorption type steering column apparatus in a non-telescopic adjustment system according to an example not specifically embodying the present invention; FIG. 13B is a rear view (showing the front side as viewed from the rear side of the automotive vehicle) of the steering column apparatus shown in FIG. 13A;
FIGS. 14A - 14C are semi-sectional views of the steering column according to a seventh embodiment of the present invention; FIG. 14A is the semi-sectional view showing a first example thereof; FIG. 14B shows a semi-sectional view and a rear view illustrating a second example thereof; FIG. 14C is the semi-sectional view showing a third example thereof; and
FIGS. 15A - 15D are semi-sectional views of the steering column according to the seventh embodiment of the present invention; FIG. 15A is the semi-sectional view showing a fourth example thereof; FIG. 15B is a semi-sectional view showing a fifth example thereof; FIG. 15C is the semi-sectional view showing a sixth example thereof; FIG. 15D is the semi-sectional view showing a seventh example thereof.

### The Embodiments of the Invention

An impact absorbing type steering column apparatus of a tilt/telescopic adjustment type according to embodiments of the present invention, will hereinafter be described with reference to the drawings.

### (First Embodiment)

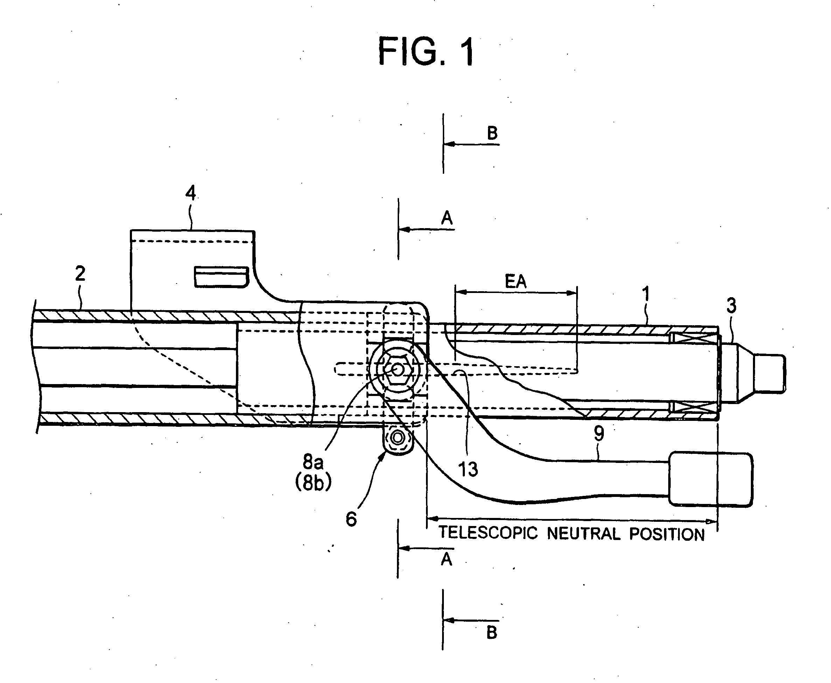

FIG. 1 is a side view of the impact absorbing type steering column apparatus of the tilt/telescopic adjustment type in a first embodiment of the present invention.

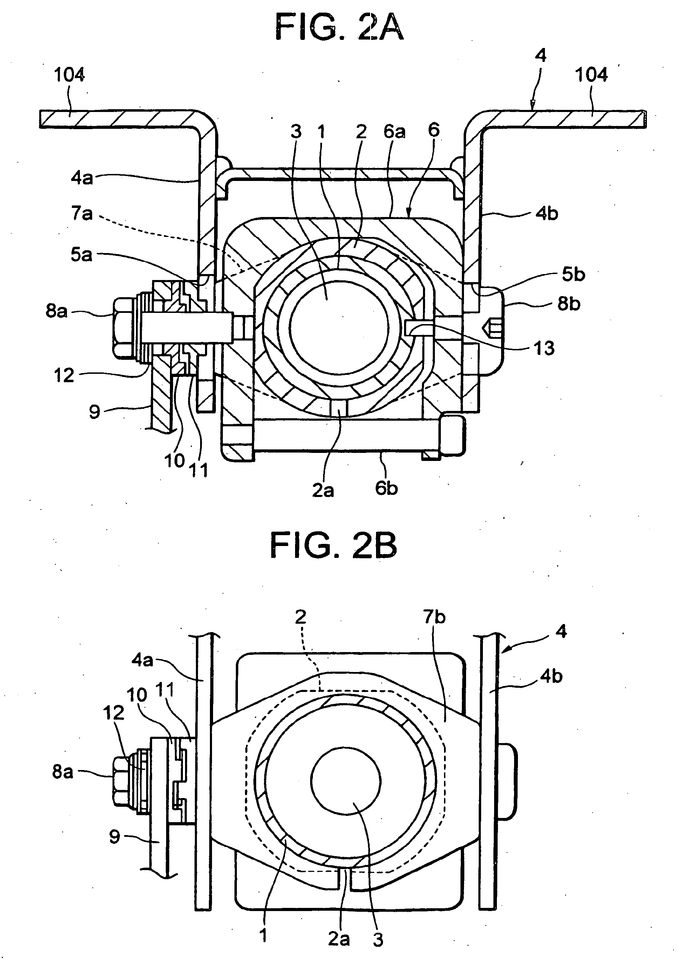

FIGS. 2A and 2B are sectional views taken along the line A-A in FIG. 1 and the line B-B in FIG. 1, respectively.

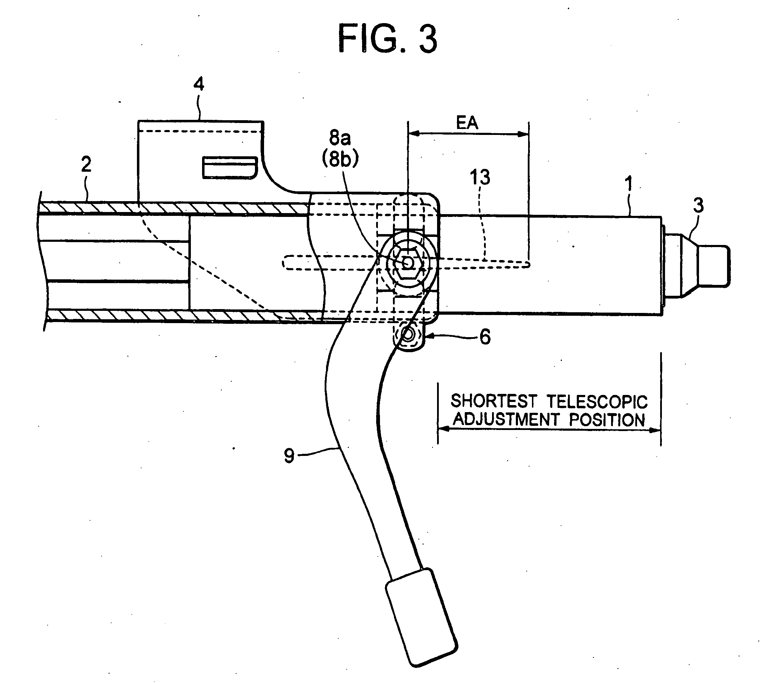

FIG. 3 is a side view of the steering column apparatus shown in FIG. 1, illustrating a shortest position in a telescopic adjustment.

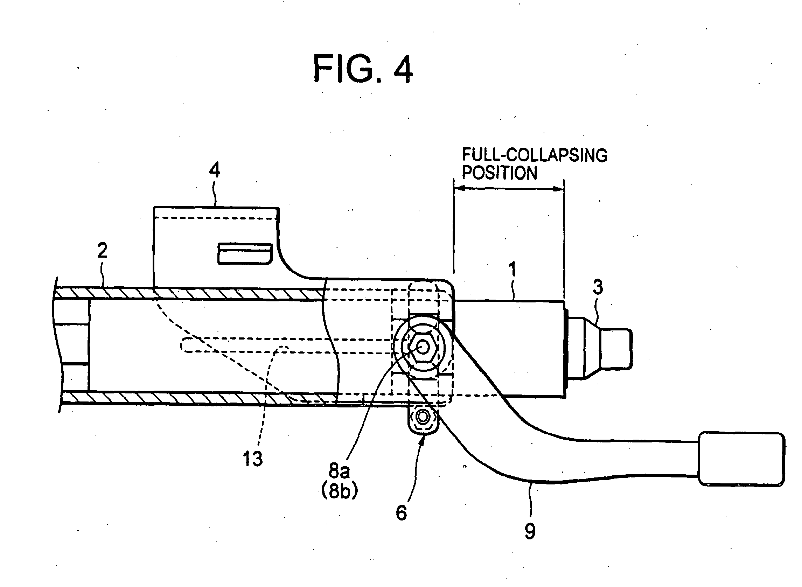

FIG. 4 is a view showing a state of an end of absorption of an impact caused when a secondary collision happens.

As shown in FIGS. 1, 2A and 2B, the first embodiment illustrates an example of a fastening lock mechanism of a center holding type tilt/telescopic adjustment apparatus. An inner column 1 is fitted in a telescopically slidable manner into an outer column 2. A steering shaft 3 is rotatably supported within the two columns 1 and 2.

The outer column 2 is secured to a car body through proper fastening members (unillustrated) by horizontally extending members 104 of a car body sided bracket 4 of the fastening lock mechanism of the tilt/telescopic adjustment apparatus. As shown in FIG. 2A, the car body sided bracket 4 integrally has a pair of side plate members 4a and 4b respectively formed with tilt adjustment grooves 5a, 5b and extending in a perpendicular direction with the outer column 2 interposed therebetween.

A ring-shaped member 6 is provided along an outer periphery of the outer column 2. The ring-shaped member 6 is constructed of a member 6a taking substantially in a U-shape and a bolt 6b for fastening both of lower side ends of this member 6a.

The outer column 2 is provided integrally with a pair of flanges 7a, 7b anterior and posterior to the ring-shaped member 6. The flanges 7a, 7b are held between the two side plate members 4a, 4b of the car body sided bracket 4.

A lower end of the outer column 2 is formed with a slit 2a extending in an axial direction between the flanges 7a and 7b. When one pair of flanges 7a, 7b are pinched and held by the two side plate members 4a, 4b, the slit 2a is closed, whereby the outer column 2 shrinks in its diameter. This contrivance enables fastening in a tilt/telescopic adjustment position in such a way that the outer column 2 presses the inner column 1.

A bolt 8a is provided outwardly of one side plate member 4a of the car body sided bracket 4, and a front end of the bolt 8a is fixed to the ring-shaped member 6.

The bolt 8a is provided with a manipulation lever 9 and a cam lock mechanism. The cam lock mechanism is structured of a first cam member 10 rotating integrally with the manipulation lever 9 and a second cam member 11 that is non-rotational. The first cam member 10 moves in the axial direction while a crest portion of the first cam member 10 engages with a target cam portion of the second cam member 11 as the first cam member 10 rotates, thus locking therewith and unlocking therefrom. The non-rotational second cam member 11 and the bolt 8a are constructed integrally in terms of their rotational action. Namely, the bolt 8a is non-rotational. A thrust bearing 12 is provided between a head of the bolt 8a and the manipulation lever 9.

A bolt 8b is provided outwardly of the other side plate member 4b of the car body sided bracket 4. An intermediate portion of the bolt 8b is thread-engaged with the ring-shaped member 6, and a front end thereof penetrates through the outer column 2 and engages with a telescopic adjustment groove 13 formed in the inner column 1. In the thus-constructed fastening lock mechanism of the tilt/telescopic adjustment apparatus, when fastened in the tilt/telescopic adjustment position, the manipulation lever 9 is rotated in one direction. Thereupon, the cam/lock mechanism acts to separate the first cam member 10 and the second cam member 11 from each other, whereby the first cam member 10 presses the bolt 8a outwards (towards the left in FIGS. 2A and 2B), and the second cam member 11 presses one side plate member 4a of the car sided bracket 4 inwards (towards the right in FIGS. 2A and 2B).

The bolt 8a pressed outwards (towards the left in FIGS. 2A and 2B) pulls inwards the bolt 8b on the opposite side through the ring-shaped member 6, whereby the bolt 8b presses the other side plate member 4b of the car body sided bracket 4 inwards (towards the left in FIGS. 2A and 2B).

Thus, one pair of side plate members 4a, 4b of the car body sided bracket 4 are respectively pressed inwards, as a result of this, one pair of flanges 7a, 7b are pinched and held by the side plate members 4a, 4b, and the slit 2a of the outer column 2 is closed, whereby the outer column 2 shrinks in its diameter. With this diametrical shrinkage, the outer column 2 presses the inner column 1, thereby enabling the fastening in the tilt/telescopic adjustment position.

In this way, the two columns 1, 2 are fastened evenly from both sides, and hence the center of the two columns 1, 2 can be invariably kept.

When released from the tilt/telescopic adjustment position, the manipulation lever 9 is rotated in the other direction, the cam/lock mechanism acts to make the first cam member 10 and the second cam member 11 approach each other, whereby the first cam member 10 moves the bolts 8a inwards (towards the right in FIGS. 2A and 2B), and the second cam member 11 releases the pressing upon one side plate member 4a of the car body sided bracket 4, and opens one side plate member 4a outwards (towards the left in FIGS. 2A and 2B).

As a result of the inward movement (towards the right in FIGS. 2A and 2B) of the bolt 8a, the bolt 8b on the opposite side can be released through the ring-shaped member 6 from being pulled inwards (towards the left in FIG. 2). The other side plate member 4b of the car body sided bracket 4 is thereby opened outwards (towards the right in FIGS. 2A and 2B).

Thus, the pair of side plate members 4a, 4b of car body sided bracket 4 respectively expand outwards, with the result that the pair of flanges 7a, 7b expand outwards, whereby the inner column 1 can be released from being fastened by the outer column 2.

Next, in the first embodiment, as shown in FIG. 1, a low-friction material treatment is effected over at least a lengthwise range of the telescopic adjustment on one or both of the slide surfaces of the fitting portions of the two columns 1, 2. The low-friction material treatment is one of baking of molybdenum disulfide, baking of fluororesin, baking of a mixture of molybdenum disulfide and fluororesin, coating of a ceramic, a metal soap treatment, a low-friction plating treatment and coating of a lubricating agent such as grease, etc. but is not limited to these treatments.

Further, the telescopic adjustment groove 13 is, as illustrated in FIGS. 2A and 2B, a bottomed groove extending in the axial directions. The telescopic adjustment groove 13 is formed so that a groove width thereof becomes gradually smaller as its position gets closer to an end portion from a central portion thereof. With this contrivance, in a section indicated by [EA], the front end of the bolt 8b sequentially expands the telescopic adjustment groove 13, whereby the impact energy can be absorbed. Note that the telescopic adjustment groove 13 may also be a through-hole. The outer column 2 may be formed with a telescopic adjustment groove similar to the groove 13, with which the front end of the bolt 8a engages, wherein both of the bolts 8a and 8b may absorb the impact energy.

Supposing that, for example, when in a state (a telescopic neutral position) shown in FIG. 1, a secondary collision is to happen, a load equal to or larger than sustainable force is applied upon the fastening lock mechanism in a tilt/telescopic adjustment position, the inner column 1 moves along the outer column 2 fixed to the car body towards the front side of the automotive vehicle, while the front end of the bolt 8b engages with the telescopic adjustment groove 13.

When the inner column 1 moves towards the front side of the automotive vehicle and reaches a position (a shortest telescopic adjustment position) shown in FIG. 3, the front end of the bolt 8b enters the section (EA) where the groove width of the telescopic adjustment groove 13 gradually decreases.

Thereafter, as seen in an illustrative transition from FIG. 3 to FIG. 4, the inner column 1 further moves towards the front side of the automotive vehicle. On this occasion, the front end of the bolt 8b sequentially expands the telescopic adjustment groove 13, thereby generating a collapse load. The impact energy is thus absorbed. As shown in FIG. 4, when the inner column 1 moves down to the end of the telescopic adjustment groove 13, the collapsing finishes.

Thus, according to the first embodiment, the low-friction material treatment is effected on one or both of the slide surfaces of the fitting portions of the two columns 1, 2, and hence the slide load of the inner column 1 can be reduced by decreasing a coefficient of the friction on the slide surfaces of the fitting portions of the two columns 1, 2. Accordingly, if a fitting length between the two columns 1, 2 is comparatively short, or even if a fitting angle of the steering wheel is large, a smooth start of the movement of the inner column 1 towards the front side of the automotive vehicle can be attained. The low-friction material treatment may be executed also on the slide-abutting surface shown by [EA] for absorbing the impact energy.

As a result, the subsequent collapsing can be smoothly performed, thereby facilitating the control of the absorption of the impact energy. Further, as a consequence of the smooth start of the movement of the inner column 1, none of a blocking load affects the two columns, thereby enabling the collapsing to be smoothly done.

Moreover, in the case of the telescopic adjustment system, if handled with one hand when performing the operation for the telescopic adjustment, the movement of the inner column through within the outer column gets unsmoothed (blocked), resulting possibly in a rise in the operating force for the telescopic adjustment. According to the first embodiment, the low-friction material treatment is effected on one or both of the slide surfaces of the fitting portions of the two columns 1, 2, and therefore the operating force for the telescopic adjustment can be reduced by decreasing the coefficient of friction on the slide surfaces of the fitting portions of the two columns 1, 2, whereby the operation for the telescopic adjustment can be smoothly conducted.

### (Second Embodiment)

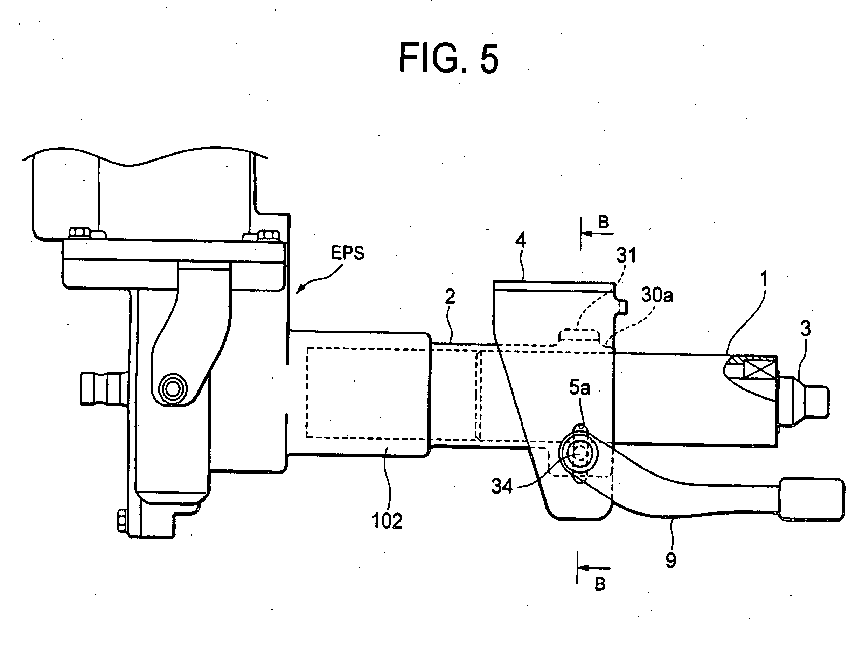

FIG. 5 is a side view of an impact absorbing type steering column apparatus of a tilt/telescopic adjustment type in accordance with a second embodiment of the present invention. In the second embodiment, an outer jacket 102 integral with the outer column 2, which will be explained later on, is integral with a gearbox of an electric power assist (Electric Power Steering (EPS)).

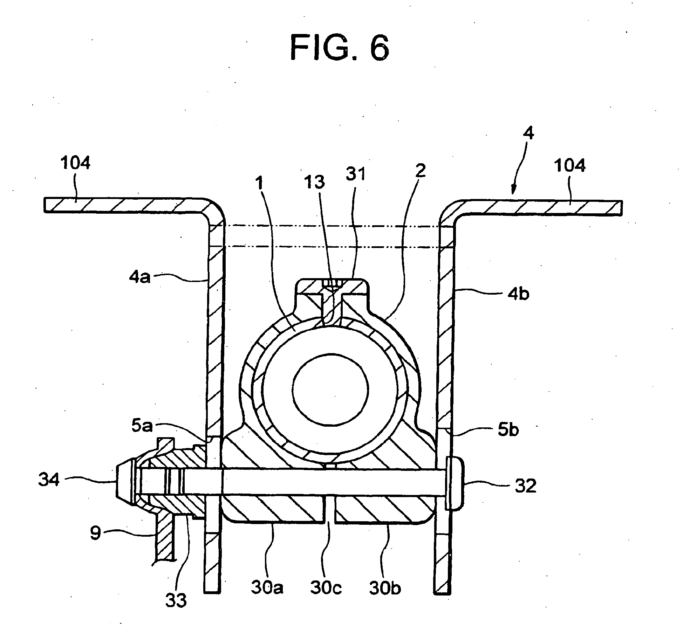

FIG. 6 is a sectional view taken along the line B-B in FIG. 5.

The second embodiment includes a column assist type electric power steering (EPS) apparatus, and is an exemplification of a tilt/telescopic fastening lock mechanism of such a type that a fastening bolt directly penetrates the outer jacket. The car body sided bracket 4 whose horizontal portions 104 are fixed to the car body is integrally formed with a pair of side plate members 4a, 4b extending in the perpendicular directions with the outer column 2 interposed therebetween. A pair of embracing members 30a, 30b having large wall thickness and serving to embrace the inner column 1 and thus fasten the column 1, are integrally formed at a rear end of the outer column 2 between the side plate members 4a, 4b. Lower ends of the pair of embracing members 30a, 30b respectively have flat portions swollen sideways suitably for being pressed by the side plate members 4a, 4b, and a slit 30c is formed in the middle between the embracing members 30a, 30b.

A stopper bolt 31 is fitted in an upper portion of the pair of embracing members 30a, 30b. A lower end of the stopper bolt 31 engages with the telescopic adjustment groove 13 of the inner column 1.

A fastening bolt 32 is inserted through the lower swollen portions of the pair of embracing members 30a, 30b between the pair of side plates 4a, 4b of the car body sided bracket 4. An adjustment nut 33 is screwed to a front thread portion of the fastening bolt 32, and the manipulation lever 9 is fitted through a fitting bolt 34 to the adjustment nut 33.

When fastened in the tilt/telescopic adjustment position, upon turning the manipulation lever 9, the fastening bolt 32 moves to the left in FIG. 6, thereby pressing the pair of side plate members 4a, 4b of the car body sided bracket 4 inwards respectively. As a result, the pair of embracing members 30a, 30b are, at their lower swollen portions, compressed narrow to close the slit 30c therebetween, whereby the inner column 1 can be fastened by pressing.

When in a tilt/telescopic cancellation, upon turning the manipulation lever 9 in the reversed direction, the fastening bolt 32 moves to the right in FIG. 6, thereby separating the pair of side plate members 4a, 4b from each other and the pair of embracing members 30a, 30b from each other. With this separation, the pressing against the inner column 1 can be cancelled. The low-friction material treatment may also be effected on the slide-abutting surface for the energy absorption (EA).

Next, according to the second embodiment, as shown in FIG. 5, the low-friction material treatment is effected over at least the lengthwise range of the telescopic adjustment on one or both of the slide surfaces of the fitting portions of the two columns 1, 2. The low-friction material treatment is one of the baking of molybdenum disulfide, the baking of fluororesin, the baking of the mixture of molybdenum disulfide and fluororesin, the coating of a ceramic, the metal soap treatment, the low-friction plating treatment and the coating of the lubricating agent such as grease, etc. but is not limited to these treatments.

Further, the telescopic adjustment groove 13 is, as illustrated in FIG. 6, a groove extending in the axial direction. The telescopic adjustment groove 13 is formed so that a groove width thereof becomes gradually smaller as its position gets closer to an end portion from a central portion thereof in the axial direction. With this contrivance, a lower end of a stopper bolt 31 sequentially expands the telescopic adjustment groove 13, whereby the impact energy can be absorbed. Note that the telescopic adjustment groove 13 may also be a bottomed groove.

Moreover, there may be provided a plurality of telescopic adjustment grooves 13 and a plurality f stopper bolts 31 in a peripheral direction, and their positions are shifted in the axial directions, whereby an occurrence of a peak load may be prevented.

Assuming that, for instance, when in a state (the telescopic neutral position) shown in FIG. 5, the secondary collision is to happen, the load equal to or larger than the sustainable force is applied upon the fastening lock mechanism in the tilt/telescopic adjustment position, the inner column 1 moves along the outer column 2 fixed to the car body towards the front side of the automotive vehicle, while the lower end of the stopper bolt 31 engages with the telescopic adjustment groove 13.

When the inner column 1 moves towards the front side of the automotive vehicle and reaches the shortest telescopic adjustment position, the lower end of the stopper bolt 31 enters a portion where the groove width of the telescopic adjustment groove 13 is small.

Thereafter, the inner column 1 further moves towards the front side of the automotive vehicle. On this occasion, the lower end of the stopper bolt 31 sequentially expands the telescopic adjustment groove 13, thereby generating a collapse load. The impact energy is thus absorbed. When the inner column 1 moves down to the end of the telescopic adjustment groove 13, the collapsing finishes.

Thus, also in the second embodiment, the low-friction material treatment is effected on one or both of the slide surfaces of the fitting portions of the two columns 1, 2, and hence the slide load of the inner column 1 can be reduced by decreasing the coefficient of the friction on the slide surfaces of the fitting portions of the two columns 1, 2. Accordingly, if the fitting length between the two columns 1, 2 is comparatively short, or even if the fitting angle of the steering wheel is large, the smooth start of the movement of the inner column 1 towards the front side of the automotive vehicle can be attained.

As a result, the subsequent collapsing can be smoothly performed, thereby facilitating the control of the absorption of the impact energy. Further, as a consequence of the smooth start of the movement of the inner column 1, none of the blocking load affects the two columns, thereby enabling the collapsing to be smoothly done.

Moreover, in the case of the telescopic adjustment system, if handled with one hand when performing the operation for the telescopic adjustment, the movement of the inner column through within the outer column gets unsmoothed (blocked), resulting possibly in the rise in the telescopic operating force. According to the second embodiment, the low-friction material treatment is effected on one or both of the slide surfaces of the fitting portions of the two columns 1, 2, and therefore the operating force for the telescopic adjustment can be reduced by decreasing the coefficient of friction on the slide surfaces of the fitting portions of the two columns 1, 2, whereby the operation for the telescopic adjustment can be smoothly conducted.

In the second embodiment illustrated in FIG. 5, the embracing members 30a, 30b integral with the outer column 2 is made integral with the EPS gear box but may also be separated therefrom.

### (Third Embodiment)

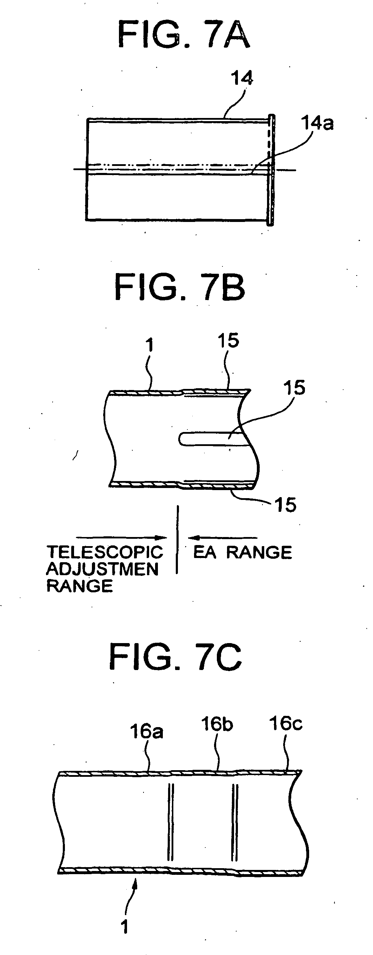

FIGS. 7A - 7C show a third embodiment. FIG. 7A is a semi-sectional view of a sleeve. FIG. 7B is a partial sectional view showing a modified example of the inner column. FIG. 7C is a partial sectional view of a further modified example of the inner column. Each of these sleeves is inserted in between the outer column 2 and the inner column 1 of the steering column apparatus as shown in, e.g., FIG. 5.

In the example in FIG. 7A, a sleeve 14, of which an inner surface is subjected to the low-friction material treatment, is fitted into portions corresponding to the fitting portions of the two columns along the inner surface of the outer column 2 of the steering column apparatus shown in FIG. 5. The low-friction material treatment is one of the baking of molybdenum disulfide, the baking of fluororesin, the baking of the mixture of molybdenum disulfide and fluororesin, the coating of a ceramic, the metal soap treatment, the low-friction plating treatment and the coating of the lubricating agent such as grease, etc. but is not limited to these treatments.

Further, a single slit 14a is formed in a circumferential area, thereby facilitating the low-friction material treatment on the inner surface. This is because rounding work can be carried out after the low-friction material treatment. Moreover, the low-friction treatment may be effected also on the outer periphery of the inner column.

FIG. 7B shows an example in which a plurality of protruded streaks 15 are formed in the peripheral direction of the inner column 1. When collapsed, the protruded streaks 15 on the inner column 1 are press-fitted into the outer column 2, thereby generating the collapse load. The impact energy is thus absorbed. The low-friction material is coated over at least one of the inner column and the outer column. An area formed with the protruded streaks on the inner column 1 serves as the energy absorption (EA) range, while the left side area of the inner column 1 from the protruded streak 15 in FIG. 7B serves as the telescopic adjustment range.

FIG. 7C shows an example in which the inner column 1 is formed so that its diameter gradually becomes larger in the sequence of a small-diameter portion 16a, an intermediate-diameter portion 16b and a large-diameter portion 16c. When collapsed, the small-diameter portion 16a, the intermediate-diameter portion 16b and the large-diameter portion 16c of the inner column 1 are sequentially press-fitted into the outer column 2, thereby generating the collapse load. The impact energy is thus absorbed. The inner column 1 may be formed in an elliptical shape suited for changing its diameter. The low friction material is coated over at least one of the inner column and the outer column.

As described above, according to embodiments of the present invention, the impact absorption system may be the system for press-fitting into the outer column 2, or may be the system for expanding the telescopic adjustment groove 13 as in the first and second embodiments, or may also be a combination of these systems. Other systems are available without being limited to those systems on condition that the energy absorption types be those utilizing the relative movement of the inner column to the outer column.

### (Fourth Embodiment)

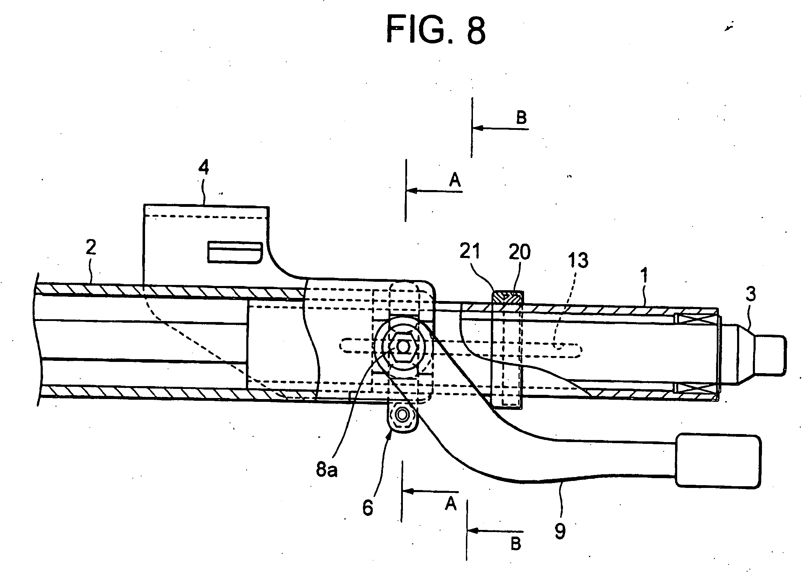

FIG. 8 is a side view of an impact absorption type steering column apparatus of the tilt/telescopic type according to a fourth embodiment of the present invention.

FIG. 2A is a sectional view taken along the line A-A in FIG. 8. In the fourth embodiment, the tilt/telescopic adjustment mechanism is the same as that in the second embodiment.

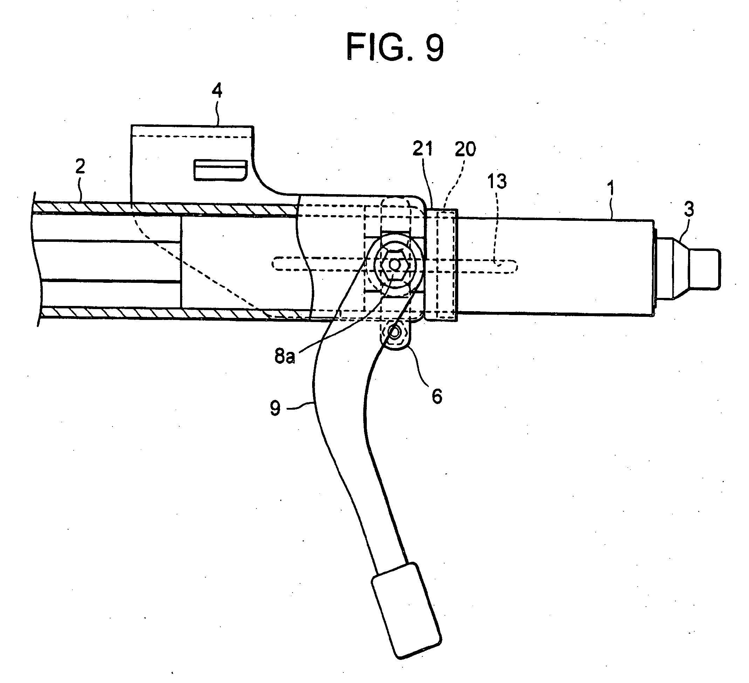

FIG. 9 is a side view of the steering column apparatus shown in FIG. 8, showing a shortest telescopic adjustment state.

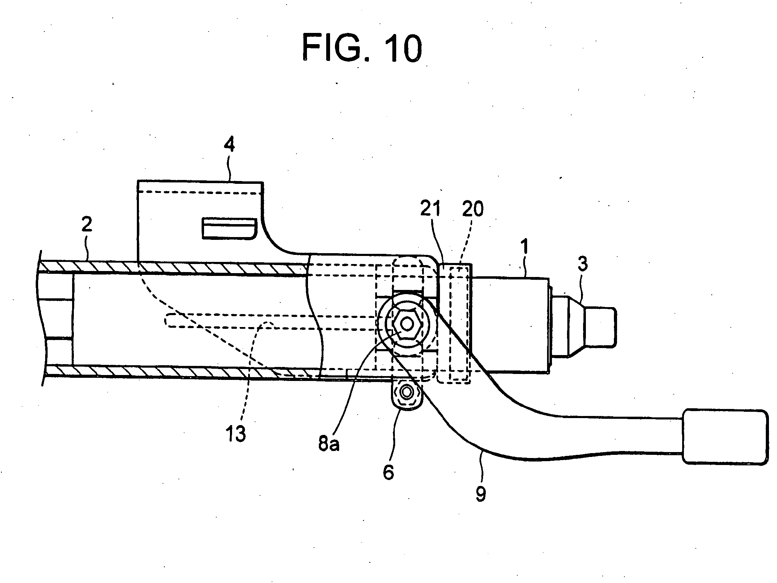

FIG. 10 is a side view of the steering column apparatus shown in FIG. 8, showing a state in which the absorption of the impact generated upon the secondary collision is terminated.

In the fourth embodiment, as illustrated in FIG. 8, a metallic ring 20 formed of iron, etc. is press-fitted or otherwise into a predetermined position of an outer peripheral surface of the inner column 1. An annular damper 21 formed of a rubber or a synthetic resin is provided integrally with the metallic ring 20 on the side of the outer column 2.

As illustrated in FIG. 9, the metallic ring 20 and the damper 21, when adjusted to the shortest telescopic adjustment state, act as a stopper for regulating the telescopic slide by abutting on the outer column 2. Moreover, on this occasion, the damper 21 prevents abutting noises caused by abutting on the outer column 2 and also restrains an impact thereof.

Further, supposing that the secondary collision happens when in the state shown in FIG. 8, the load equal to or larger than the sustainable force is applied upon the fastening lock mechanism in the tilt/telescopic adjustment position, the inner column 1 moves along the outer column 2 fixed to the car body towards the front side of the automotive vehicle, while the front side end of the bolt 8b engages with the telescopic adjustment groove 13.

When the inner column 1 moves to some extent towards the front side of the automotive vehicle, the metallic ring 20 and the damper 21 impinge on the rear end of the outer column 2. Thereafter, as shown in FIGS. 9 and 10, the inner column 1 further moves towards the front side of the automotive vehicle. On this occasion, the metallic ring 20 frictionally slides on the outer peripheral surface of the inner column 1 moving towards the front side of the automotive vehicle while engaging with the rear end of the outer column 2, thereby generating the collapse load. The impact energy is thus absorbed. As shown in FIG. 10, when the inner column 1 moves down to the end of the telescopic adjustment groove 13, the collapsing finishes.

From what has been discussed so far in the fourth embodiment, it is possible to extremely easily to set and adjust the collapse load by adjusting the fitting state (the fastening state) of the metallic ring 20.

Moreover, according to the fourth embodiment, as shown in FIG. 8, the low-friction material treatment is effected on one or both of the slide surfaces, especially at least on the collapse slide surface at the fitting portions of the two columns 1, 2. The low-friction material treatment may also be effected on the slide-abutting surface in the energy absorption range. The low-friction material treatment is one of the baking of molybdenum disulfide, the baking of fluororesin, the baking of the mixture of molybdenum disulfide and fluororesin, the coating of a ceramic, the metal soap treatment, the low-friction plating treatment and the coating of the lubricating agent such as grease, etc. but is not limited to these treatments.

Thus, according to the fourth embodiment, the low-friction material treatment is effected on one or both of the slide surfaces of the fitting portions of the two columns 1, 2, and hence the slide load of the inner column 1 can be reduced by decreasing the coefficient of the friction on the slide surfaces of the fitting portions of the two columns 1, 2. Accordingly, if the fitting length between the two columns 1, 2 is comparatively short, or even if the fitting angle of the steering wheel is large, the smooth start of the movement of the inner column 1 towards the front side of the automotive vehicle can be attained.

As a result, the subsequent collapsing can be smoothly performed, thereby facilitating the control of the absorption of the impact energy. Further, as a consequence of the smooth start of the movement of the inner column 1, none of the blocking load affects the two columns, thereby enabling the collapsing to be smoothly done.

Moreover, in the case of the telescopic adjustment system, if handled with one hand when performing the operation for the telescopic adjustment, the movement of the inner column through within the outer column gets unsmoothed (blocked), resulting possibly in the rise in the telescopic operating force. In the fourth embodiment, the low-friction material treatment is effected on one or both of the slide surfaces of the fitting portions of the two columns 1, 2, and therefore the operating force for the telescopic adjustment can be reduced by decreasing the coefficient of friction on the slide surfaces of the fitting portions of the two columns 1, 2, whereby the operation for the telescopic adjustment can be smoothly conducted.

### (Fifth Embodiment)

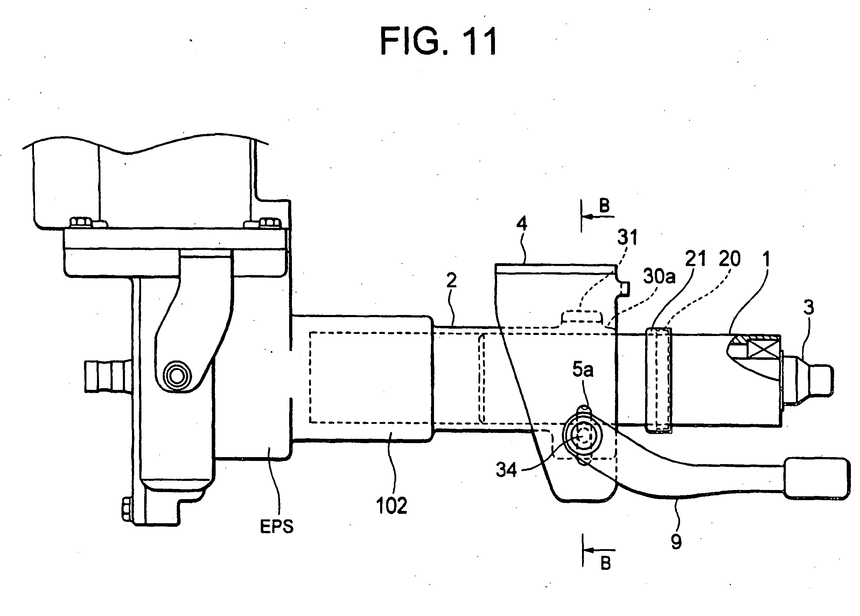

FIG. 11 is a side view of an impact absorption type steering column apparatus of the tilt/telescopic type according to a fifth embodiment of the present invention. In the fifth, the tilt/telescopic adjustment mechanism is the same as that in the second embodiment.

FIG. 6 is a sectional view taken along the line B-B in FIG. 11.

In the fifth embodiment, as illustrated in FIG. 11, a metallic ring 20 formed of iron, etc. is press-fitted or otherwise into a predetermined position on the inner column 1. A damper 21 formed of a rubber or a synthetic resin is provided integrally with the metallic ring 20 on the side of the outer column 2.

The metallic ring 20 and the damper 21, when adjusted to the shortest telescopic adjustment state, act as a stopper for regulating the telescopic slide by abutting on the outer column 2. Moreover, on this occasion, the damper 21 prevents abutting noises caused by abutting on the outer column 2 and also restrains an impact thereof.

Further, if the secondary collision happens and when the inner column 1 moves to some extent towards the front side of the automotive vehicle, the metallic ring 20 and the damper 21 impinge on the rear end of the outer column 2. Thereafter, the inner column 1 further moves towards the front side of the automotive vehicle. On this occasion, the metallic ring 20 frictionally slides on the outer peripheral surface of the inner column 1 moving towards the front side of the automotive vehicle while being engaged and stopped with the rear end of the outer column 2, thereby generating the collapse load. The impact energy is thus absorbed.

In the fifth embodiment, the outer jacket 102 integral with the outer column 2 is formed integrally with a housing of the electric power assist (Electric Power Steering (EPS)) mechanism.

From what has been discussed so far in the fifth embodiment, it is possible to extremely easily to set and adjust the collapse load by adjusting the fitting state (the fastening state) of the metallic ring 20.

Moreover, according to the fifth embodiment, as shown in FIG. 11, the low-friction material treatment is effected on one or both of the slide surfaces of the fitting portions of the two columns 1, 2. The low-friction material treatment is as described above and effected in at least the telescopic slide-abutting range anterior to the ring and may also be effected posterior to the ring.

Thus, according to the fifth embodiment, the low-friction material treatment is effected on one or both of the slide surfaces of the fitting portions of the two columns 1, 2, and hence the slide load of the inner column 1 can be reduced by decreasing the coefficient of the friction on the slide surfaces of the fitting portions of the two columns 1, 2. Accordingly, if the fitting length between the two columns 1, 2 is comparatively short, or even if the fitting angle of the steering wheel is large, the smooth start of the movement of the inner column 1 towards the front side of the automotive vehicle can be attained. As a result, the subsequent collapsing can be smoothly performed, thereby facilitating the control of the absorption of the impact energy.

Moreover, in the case of the telescopic adjustment system, if handled with one hand when performing the operation for the telescopic adjustment, the movement of the inner column through within the outer column gets unsmoothed (blocked), resulting possibly in the rise in the telescopic operating force. In the fifth embodiment, the low-friction material treatment is effected on one or both of the slide surfaces of the fitting portions of the two columns 1, 2, and therefore the telescopic operating force can be reduced by decreasing the coefficient of friction on the slide surfaces of the fitting portions of the two columns 1, 2, whereby the telescopic operation can be smoothly conducted.

### (Sixth Embodiment)

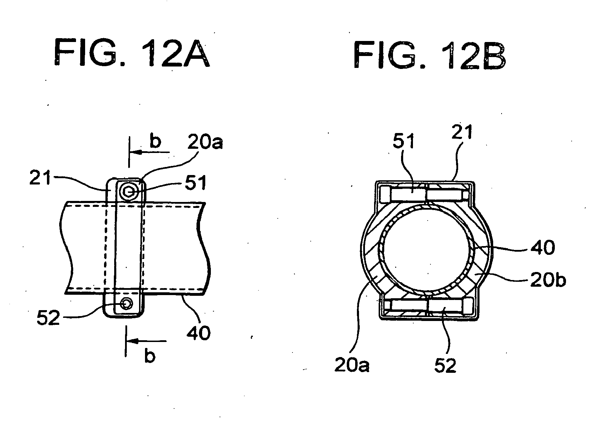

FIG. 12A is a side view of an impact absorption type steering column apparatus of the tilt/telescopic type according to a sixth embodiment of the present invention. FIG. 12B is a sectional view taken along the line b-b in FIG. 12A.

In the sixth embodiment, the metallic ring 20 is fitted on an outer peripheral surface of an inner column 40 subjected to the low-friction material treatment described above. The metallic ring 20 is constructed of a pair of half-ring segments 20a, 20b into which the ring 20 is segmented by half. The pair of half-ring segments 20a, 20b are fastened at their upper and lower ends by a pair of bolts 51, 52. A damper 21 formed of a synthetic resin is covered over the pair of half-ring segments 20a, 20b.

Thus, a gap between the two pieces of half-ring segments 20a, 20b is changed by varying the fastening force of the pair of bolts 51, 52, whereby the fitting state (fastening state) of the metallic ring 20 can be adjusted and the collapse load can be set and adjusted much easier than in the embodiments discussed above.

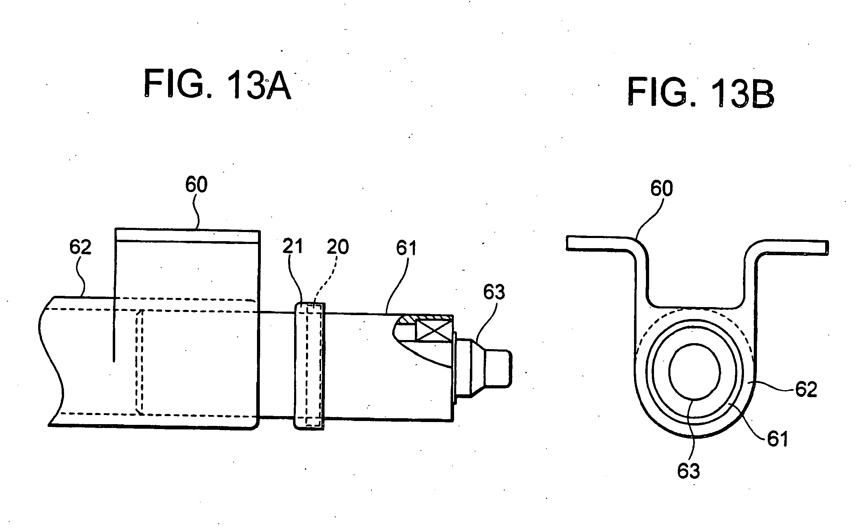

FIG. 13A is a side view of an impact absorption type steering column apparatus of a non-telescopic type according to an example not specifically embodying the present invention. FIG. 13B is a rear view (showing the front side as viewed from the rear side of the automotive vehicle) of the steering column apparatus shown in FIG. 13A.

The impact absorption type steering column apparatus in this example comes under a non-telescopic adjustment system incapable of making the telescopic adjustment, wherein an inner column 61 is so press-fitted into an outer column 62 formed integrally with a car body sided bracket 60 as not to slide thereon at a normal time, and a steering shaft 63 is rotatably supported within the two columns 61, 62. If the secondary collision happens, however, a contrivance is that the inner column 61 becomes movable along the outer column 62 towards the front side of the automotive vehicle.

Next, in this example, the metallic ring 20 formed of iron, etc. is press-fitted or otherwise into a predetermined position on the inner column 61. The damper 21 formed of a rubber or a synthetic resin is provided on the metallic ring 20 on the side of an outer column 62.

If the secondary collision happens and when the inner column 61 moves to some extent towards the front side of the automotive vehicle, the metallic ring 20 and the damper 21 impinge on the rear end of the outer column 62. Thereafter, the inner column 61 further moves towards the front side of the automotive vehicle. On this occasion, the metallic ring 20 frictionally slides on the outer peripheral surface of the inner column 61 moving towards the front side of the automotive vehicle while engaging with the rear side end of the outer column 62, thereby generating the collapse load. The impact energy is thus absorbed.

From what has been discussed so far in this example, it is possible to extremely easily to set and adjust the collapse load by adjusting the fitting state (the fastening state) of the metallic ring 20.

Moreover, according to this example, as shown in FIGS. 13a and 13B, the low-friction material treatment is effected on one or both of the slide surfaces of the fitting portions of the two columns 61, 62. The low-friction material treatment is as described above. The low-friction material treatment is effected on the press-fitting portions of the two columns 61, 62 or on the energy absorbing portion.

In this example, the low-friction material treatment is effected on one or both of the slide surfaces of the fitting portions of the two columns 61, 62, and hence the slide load of the inner column 61 can be reduced by decreasing the coefficient of the friction on the slide surfaces of the fitting portions of the two columns 61, 62. Accordingly, if the fitting length between the two columns 61, 62 is comparatively short, or even if the fitting angle of the steering wheel is large, the smooth start of the movement of the inner column 61 towards the front side of the automotive vehicle can be attained. As a result, the subsequent collapsing can be smoothly performed, thereby facilitating the control of the absorption of the impact energy.

### (Seventh Embodiment)

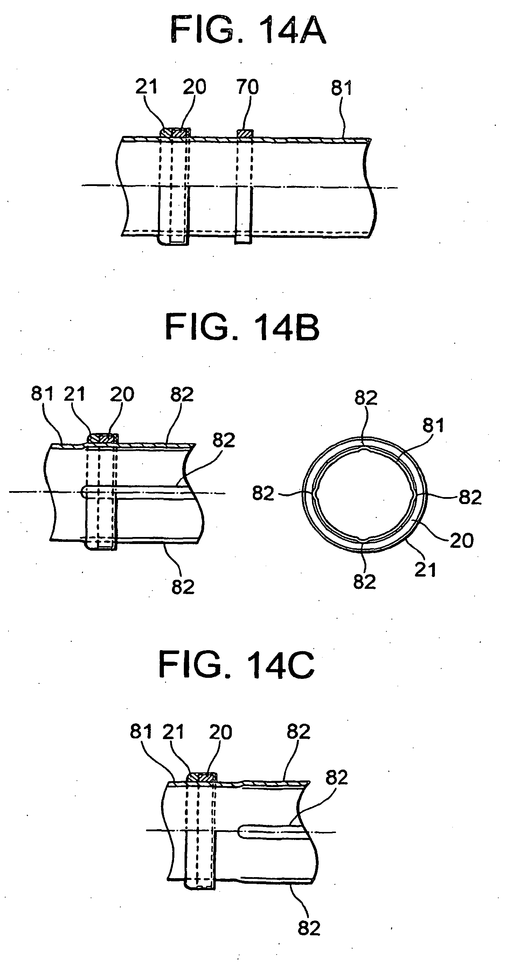

FIGS. 14A - 14C are semi-sectional views of the steering column in a seventh embodiment of the present invention. FIG. 14A is the semi-sectional view showing a first example thereof. FIG. 14B shows a semi-sectional view and a rear view illustrating a second example thereof. FIG. 14C is the semi-sectional view showing a third example thereof. The seventh embodiment can be applied to the fourth through sixth embodiments discussed above.

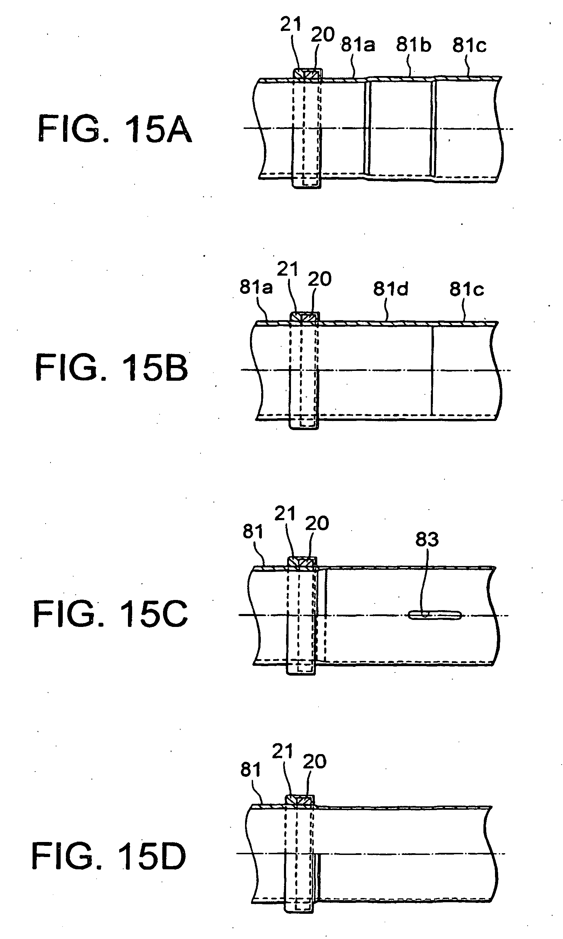

FIGS. 15A - 15D are semi-sectional views of the steering column in the seventh embodiment of the present invention. FIG. 15A is the semi-sectional view showing a fourth example thereof. FIG. 15B is a semi-sectional view showing a fifth example thereof. FIG. 15C is the semi-sectional view showing a sixth example thereof. FIG. 15D is the semi-sectional view showing a seventh example thereof.

In FIGS. 14A - 14C and 15A - 15D, the right side corresponds to the rear side of the automotive vehicle, while the left side corresponds to the front side of the automotive vehicle. In the respective Figures, the configurations on the front and rear sides of the automotive vehicle are the same as the configurations of the front and rear sides of the ring 20 and of the damper 21 in FIG. 11. In the case of the seventh embodiment, when the collision happens, the ring 20 impinges on the outer jacket, subsequently the collapsing progresses to such an extent that the outer jacket impinges on the ring 70, thereby absorbing the energy.

In the first example in FIG. 14A, in addition to the metallic ring 20 and the damper 21 that are press-fitted as in the fourth embodiment, another metallic ring 70 is provided in a different position on the steering column 81 in the axial directions.

The second example in FIG. 14B is that the steering column 81 is formed with four lines of protruded streaks 82 spaced equally in the peripheral direction. Each of the protruded streaks 82 extends in the axial directions. The metallic ring 20 and the damper 21 are press-fitted onto the outer peripheral portions of these protruded streaks 82. Note that the protruded streaks may be a plastically deformable member as shown in the Figure and may also be formed by cut-raising.

The third example in FIG. 14C is that the same metallic ring 20 and damper 21 as those in the fourth embodiment are fitted onto the portions of the protruded streaks 82 on the front side of the automotive vehicle. With this contrivance, resistance caused by the frictional slide is increased stepwise, thereby augmenting the collapse load.

In the fourth example on FIG. 15A, the steering column 81 is constructed of a small-diameter portion 81a, an intermediate-diameter portion 81b and a large-diameter portion 81c. The same metallic ring 20 and damper 21 as those in the fourth embodiment are fitted onto the small-diameter portion 81a. Owing to this contrivance, the resistance caused by the frictional slide is increased at three stages, thereby further augmenting the collapse load. Moreover, the collapsing characteristic can be changed as intended in a way that properly changes lengths of the large-, intermediate- and small-diameter portions.

The fifth example in FIG. 15B is such that a tapered portion 81d is formed between the small-diameter portion 81a and the large-diameter portion 81c, and the metallic ring 20 and the damper 21 are fitted onto the small-diameter portion 81a. With this contrivance, the resistance caused by the frictional slide is gradually increased, thereby further augmenting the collapse load.

The sixth example in FIG. 15C is that the steering column 81 has the metallic ring 20 that is made thin in its wall thickness on the rear side of the automotive vehicle, and is formed with a resistance-escape hole 83. Owing to this contrivance, the resistance caused by the frictional slide is reduced, thus attaining a scheme of decreasing the collapse load.

In the seventh example in FIG. 15D, the steering column 81 has the metallic ring 20 that is made thin in its wall thickness of a major-diametrical portion thereof on the rear side of the automotive vehicle. With this contrivance, the resistance caused by the frictional slide is reduced, thus attaining a scheme of decreasing the collapse load.

It is to be noted that embodiments of the present invention can be modified in a variety of forms without being limited to the embodiments discussed above. Embodiments of the present invention can be applied to an electric power steering system and are highly effective in a column type electric power steering particularly because of difficulty of setting a sufficient amount of collapsing. Moreover, embodiments of the present invention are also applicable to a tilt type and a telescopic type

As explained above, according to embodiments of the present invention, if the steering column apparatus is of the telescopic adjustment type, the low-friction material treatment is effected on one or both of the slide surfaces of the fitting portions of the telescopic adjustment portions between the two columns. Then, if the steering column apparatus is one of the non-telescopic adjustment type, the low-friction material treatment is effected on the press-fitting portions of the two columns, and it is therefore possible to reduce the slide load of the upper column by reducing the coefficient of friction on the slide surfaces of the fitting portions of the two columns. Accordingly, if the fitting length between the two columns is comparatively short, or even if the fitting angle of the steering wheel is large, the smooth start of the movement of the upper column towards the front side of the automotive vehicle can be attained.

As a result, the subsequent collapsing can be smoothly performed, thereby facilitating the control of the absorption of the impact energy. Further, as a consequence of the smooth start of the movement of the upper column, none of the blocking load affects the two columns, thereby enabling the collapsing to be smoothly done.

Moreover, in the case of the telescopic adjustment type, if handled with one hand in the unsmoothed state when performing the telescopic operation, resulting presumably in the rise in the operating force. According to embodiments of the present invention, however, the low-friction material treatment is effected on one or both of the slide surfaces of the fitting portions of the two columns, and therefore the telescopic operating force can be reduced by decreasing the coefficient of friction on the slide surfaces of the fitting portions of the two columns, whereby the telescopic operation can be smoothly conducted.

## Claims

1. A tilt and telescopic position adjustable, impact absorbing and column assist type electric power steering column apparatus for an automotive vehicle which comprises:
an outer column (2); and
an inner column (1) telescopically slidably fitted in the outer column, **characterised by**
a fastening lock mechanism (8a, 8b, 9, 10, 11) operable between a fastening state in which the fastening lock mechanism fastens the fitting portions of said outer column and said inner column radially inwardly so that the steering column is fixed to a tilt and telescopic adjusted position and an unfastening state in which the outer column and the inner column are released so that the tilt and the telescopic position is adjustable;
either of the outer column or inner column being fixed to the car body (4) through a housing of an electric power assist mechanism;
said outer column and said inner column being fitted to each other so as to, when fastened by said fastening lock mechanism, absorb an impact energy upon a secondary collision while moving an upper one of said two columns towards a front side of the automotive vehicle,
and wherein a low-friction material treatment is effected on one or both of slide surfaces of fitting portions of said two columns.

2. A tilt and telescopic position adjustable, impact absorbing and column assist type electric power steering column apparatus for an automotive vehicle which comprises:
an outer column (2); and
an inner column (1) telescopically slidably fitted in the outer column, **characterised by**
a fastening lock mechanism (8a, 8b, 9, 10, 11) operable between a fastening state in which the fastening lock mechanism fastens the fitting portions of said outer column and said inner column radially inwardly so that the steering column is fixed to a tilt and telescopic adjusted position and an unfastening state in which the outer column and the inner column are released so that the tilt and the telescopic position is adjustable;
either of the outer column or inner column being fixed to the car body (4) through a housing of an electric power assist mechanism;
said outer column and said inner column being fitted to each other so as to, when fastened by said fastening lock mechanism, absorb an impact energy upon a secondary collision while moving an upper one of said two columns towards a front side of the automotive vehicle,
and wherein a sleeve subjected to a low-friction material treatment is interposed between fitting portions of said two columns.

3. An impact absorbing type steering column apparatus for an automotive vehicle according to claim 1 or claim 2, wherein the low-friction material treatment is one of baking of molybdenum disulfide, baking of fluororesin, baking of a mixture of molybdenum disulfide and fluororesin, coating of a ceramic, a metal soap treatment, a low-friction plating treatment and coating of a lubricating agent.

## Patentansprüche

1. Bezüglich einer Kippposition und teleskopischen Position einstellbare, stoßdämpfende und elektrisch betriebene Lenksäulenvorrichtung des säulengestützten Typs für ein Fahrzeug, umfassend:
eine äußere Säule (2); und
eine innere Säule (1), die teleskopisch verschiebbar in die äußere Säule eingepasst ist, **gekennzeichnet durch**
einen Befestigungsverriegelungsmechanismus (8a, 8b, 9, 10, 11), der zwischen einem Befestigungszustand, in dem der Befestigungsverriegelungsmechanismus die Einpassabschnitte der äußeren Säule und der inneren Säule radial nach innen derart befestigt, dass die Lenksäule in einer Kippposition und einer teleskopisch eingestellten Position befestigt wird, und einem Lösungszustand betätigt werden kann, in dem die äußere Säule und die innere Säule derart gelöst werden, dass die Kippposition und die teleskopische Position eingestellt werden können;
wobei jede der äußeren Säule oder der inneren Säule an dem Autokörper (4) **durch** ein Gehäuse eines elektrisch betriebenen Hilfsmechanismus befestigt ist;
wobei die äußere Säule und die innere Säule derart aneinander angepasst sind, dass, wenn sie **durch** den Befestigungsverriegelungsmechanismus befestigt sind, sie bei einer sekundären Kollision eine Aufprallenergie absorbieren, während sich eine obere der zwei Säulen zu einer Vorderseite des Fahrzeugs bewegt;
und wobei eine Behandlung mit einem reibungsarmen Material auf einer oder beiden Gleitoberflächen der Einpassabschnitte der zwei Säulen ausgeführt wird.

2. Bezüglich einer Kippposition und einer teleskopischen Position einstellbare, stoßdämpfende und elektrisch betriebene Lenksäulenvorrichtung des säulengestützten Typs für ein Motorfahrzeug, umfassend:
eine äußere Säule (2); und
eine innere Säule (1), die teleskopisch verschiebbar in die äußere Säule eingepasst ist, **gekennzeichnet durch**
einen Befestigungsverriegelungsmechanismus (8a, 8b, 9, 10, 11), der zwischen einem Befestigungszustand, in dem der Befestigungsverriegelungsmechanismus die Einpassabschnitte der äußeren Säule und der inneren Säule radial nach innen derart befestigt, dass die Lenksäule in einer Kippposition und einer teleskopisch eingestellten Position befestigt wird, und einem Lösungszustand betätigt werden kann, in dem die äußere Säule und die innere Säule derart gelöst werden, dass die Kippposition und die teleskopische Position eingestellt werden können;
wobei jede der äußeren Säule oder der inneren Säule an dem Autokörper (4) **durch** ein Gehäuse eines elektrisch betriebenen Hilfsmechanismus befestigt ist;
wobei die äußere Säule und die innere Säule derart aneinander angepasst sind, dass, wenn sie **durch** den Befestigungsverriegelungsmechanismus befestigt sind, sie bei einer sekundären Kollision eine Aufprallenergie absorbieren, während sich eine obere der zwei Säulen zu einer Vorderseite des Fahrzeugs bewegt;
und wobei eine Hülse, die einer Behandlung mit einem reibungsarmen Material unterzogen worden ist, zwischen den Einpassabschnitten der zwei Säulen angeordnet ist.

3. Lenksäulenvorrichtung des stoßdämpfenden Typs für ein Fahrzeug nach Anspruch 1 oder Anspruch 2, wobei die Behandlung mit einem reibungsarmen Material eine von Einbrennen von Molybdändisulfid, Einbrennen von Fluorharz, Einbrennen einer Mischung von Molybdändisulfid und Fluorharz, Beschichten einer Keramik, einer Metallseifenbehandlung, einer Metallisierungsbehandlung mit geringer Reibung und Beschichtung eines Schmiermittels ist.

## Revendications

1. Appareil de colonne de direction à assistance électrique de type amortissant les chocs et à colonne à assistance ajustable à position inclinable et télescopique pour un véhicule automobile qui comprend :
une colonne extérieure (2) ; et
une colonne intérieure (1) ajustée à coulissement télescopique dans la colonne extérieure,
**caractérisé par**
un mécanisme de verrouillage de fixation (8a, 8b, 9, 10, 11) actionnable entre un état de fixation dans lequel le mécanisme de verrouillage de fixation fixe les parties d'ajustement de ladite colonne extérieure et de ladite colonne intérieure radialement vers l'intérieur de sorte que la colonne de direction soit fixée à une position ajustée inclinable et télescopique et un état de non fixation dans lequel la colonne extérieure et la colonne intérieure sont libérées de sorte que la position inclinable et télescopique soit ajustable ;
l'une quelconque parmi la colonne extérieure ou la colonne intérieure étant fixée à la carrosserie (4) grâce à un logement d'un mécanisme d'assistance électrique ;
ladite colonne extérieure et ladite colonne intérieure étant ajustées l'une à l'autre de manière que, quand elles sont fixées par ledit mécanisme de verrouillage de fixation, elles absorbent une énergie due aux chocs lors d'une collision secondaire tout en déplaçant une colonne supérieure desdites deux colonnes vers un côté avant du véhicule automobile,
et où un traitement de matériau à frottement réduit est effectué sur l'une ou les deux surfaces de coulissement des parties de fixation desdites deux colonnes.

2. Appareil de colonne de direction à assistance électrique de type amortissant les chocs et à colonne à assistance ajustable à position inclinable et télescopique pour un véhicule automobile qui comprend :
une colonne extérieure (2) ; et
une colonne intérieure (1) ajustée à coulissement télescopique dans la colonne extérieure,
**caractérisé par**
un mécanisme de verrouillage de fixation (8a, 8b, 9, 10, 11) actionnable entre un état de fixation dans lequel le mécanisme de verrouillage de fixation fixe les parties d'ajustement de ladite colonne extérieure et de ladite colonne intérieure radialement vers l'intérieur de sorte que la colonne de direction soit fixée à une position ajustée inclinable et télescopique et un état de non fixation dans lequel la colonne extérieure et la colonne intérieure sont libérées de sorte que la position inclinable et télescopique soit ajustable ;
l'une quelconque parmi la colonne extérieure ou la colonne intérieure étant fixée à la carrosserie (4) grâce à un logement d'un mécanisme d'assistance électrique ,
ladite colonne extérieure et ladite colonne intérieure étant ajustées l'une à l'autre de manière que, quand elles sont fixées par ledit mécanisme de verrouillage de fixation, elles absorbent une énergie due aux chocs lors d'une collision secondaire tout en déplaçant une colonne supérieure desdites deux colonnes vers un côté avant du véhicule automobile,
et où un manchon soumis à un traitement de matériau à frottement réduit est intercalé entre des parties de fixation desdites deux colonnes.

3. Appareil de colonne de direction de type amortissant les chocs pour un véhicule automobile selon la revendication 1 ou la revendication 2, dans lequel le traitement de matériau à frottement réduit est l'un parmi la cuisson de disulfure de molybdène, la cuisson de fluororésine, la cuisson d'un mélange de disulfure de molybdène et de fluororésine, le revêtement d'une céramique, un traitement au savon métallique, un traitement de placage à frottement réduit et un revêtement d'un agent lubrifiant.
